# EUROPÄISCHE PATENTSCHRIFT

(11) **EP 3 869 955 B1**
(45) Veröffentlichungstag und Bekanntmachung des Hinweises auf die Patenterteilung: **07.12.2022**
(21) Anmeldenummer: 19798176.4
(22) Anmeldetag: 18.10.2019
(51) Int. Cl.: A01M 7/00

(54) **VERFAHREN ZUM AUSBRINGEN VON SPRITZFLUESSIGKEIT**
METHOD FOR THE APPLICATION OF SPRAY LIQUID
MÉTHODE D'APPLICATION D'UN LIQUIDE PULVÉRISÉ

(30) Priorität: 25.10.2018 DE 102018126585
(43) Veröffentlichungstag der Anmeldung: 01.09.2021
(73) Patentinhaber: Amazonen-Werke H. Dreyer SE & Co. KG, 49205 Hasbergen (DE)
(72) Erfinder: KLEMANN, Timo, 49191 Belm (DE); KIEFER, Stefan, 49074 Osnabrück (DE)
(86) Internationale Anmeldenummer: PCT/EP2019/078356
(87) Internationale Veröffentlichungsnummer: WO 2020/083770

(56) Entgegenhaltungen:
- EP-A2- 2 567 617
- WO-A1-2012/032245
- WO-A1-2018/154490
- DE-A1-102012 101 013
- DE-A1-102014 112 441
- US-A- 5 050 771
- US-A- 5 842 307
- US-A1- 2017 251 656

## Beschreibung

Die Erfindung betrifft ein Verfahren zum Ausbringen von Spritzflüssigkeit nach dem Oberbegriff des Patentanspruchs 1 und eine landwirtschaftliche Spritzeinrichtung nach dem Oberbegriff des Patentanspruchs 11, wie jeweils bekannt aus WO 2012/032245 A1.

Beim Ausbringen von Spritzflüssigkeit, wie etwa flüssigem Pflanzenschutzmittel, werden üblicherweise landwirtschaftliche Spritzeinrichtungen eingesetzt, welche mehrere an einem Spritzgestänge angeordnete Spritzelemente, beispielswiese Spritzdüsen, aufweisen.

Da die Aussaat einer Vielzahl von landwirtschaftlichen Nutzpflanzen entlang von Saatreihen erfolgt, ergeben sich in der Aufwuchsphase entsprechende Pflanzenreihen auf der landwirtschaftlichen Nutzfläche.

Im Stand der Technik sind bereits Einrichtungen zum Erkennen von Wildpflanzen bekannt, welche neben den Nutzpflanzen auf der landwirtschaftlichen Nutzfläche heranwachsen. Auf Grundlage der Wildpflanzenerkennung kann dann zielgerichtet Pflanzenschutzmittel ausgebracht werden, um die Wildpflanzen zu bekämpfen und das Wachstum der Nutzpflanzen weiter zu steigern. Eine entsprechende Einrichtung ist beispielsweise aus DE 44 13 739 A1 bekannt.

Ferner ist aus der Druckschrift US 2015/0245565 A1 ein Verfahren bekannt, bei welchem Pflanzenreihen erfasst werden, um die Identifikation von Schadbewuchs zu verbessern. Das Dokument schlägt somit eine Möglichkeit zur Schadbewuchsbekämpfung vor.

Aufgrund verschiedener Umstände kann es jedoch vorkommen, dass die auf der landwirtschaftlichen Nutzfläche heranwachsenden Nutzpflanzen lokal nicht entlang des beabsichtigten Reihenmusters positioniert sind. Dies kann beispielsweise auf eine unpräzise Aussaat zurückzuführen sein. Ferner ergeben sich im Bereich des Vorgewendes regelmäßig Bereiche, in welchen feldinterne Reihenstrukturen unterbrochen werden.

Die der Erfindung zugrundeliegende Aufgabe besteht somit darin, eine pflanzenreihenbezogene Ausbringung von Spritzflüssigkeit zu ermöglichen, bei welcher die Ausbringung im Bereich von Reihenunterbrechungen lokal in geeigneter Weise angepasst werden kann.

Die Aufgabe wird gelöst durch ein Verfahren der eingangs genannten Art, wobei die Spritzflüssigkeit gemäß Anspruch 1 in Reihenbereichen der landwirtschaftlichen Nutzfläche mit im Wesentlichen parallel zur Fahrtrichtung der landwirtschaftlichen Spritzeinrichtung verlaufenden Pflanzenreihen von zumindest einem Spritzelement mit einem ersten Spritzmuster ausgebracht wird und in reihenfreien Bereichen der landwirtschaftlichen Nutzfläche ohne parallel zur Fahrtrichtung der landwirtschaftlichen Spritzeinrichtung verlaufenden Pflanzenreihen von zumindest einem Spritzelement mit einem zweiten Spritzmuster ausgebracht wird.

Die Erfindung macht sich die Erkenntnis zunutze, dass durch die Kombination der Pflanzenreihenerfassung einerseits und der Möglichkeit Spritzflüssigkeit sowohl reihenbezogen als auch flächig ausbringen zu können andererseits, eine geeignete Ausbringanpassung in Bereichen, in denen die Reihenstruktur auf der landwirtschaftlichen Nutzfläche unterbrochen ist, umgesetzt werden kann. Das Verfahren erlaubt somit in Pflanzenreihen aufweisenden Reihenbereichen eine reihenbezogene Spritzflüssigkeitsausbringung und gleichzeitig eine flächige Spritzflüssigkeitsausbringung in reihenfreien Bereichen, in welchen keine Pflanzenreihen in Fahrtrichtung der landwirtschaftlichen Spritzeinrichtung vorhanden sind. Dies führt zu einer erheblichen Einsparung von Spritzflüssigkeit. Bei der Ausbringung von Spritzflüssigkeit auf Rüben und Mais können somit erhebliche Mengen an Herbiziden eingespart werden. Bei der Ausbringung von Spritzflüssigkeit auf Kartoffeln können erhebliche Mengen an Fungiziden eingespart werden.

Pflanzenreihen im Sinne der Erfindung sind Reihen von Pflanzen, welche im Wesentlichen parallel zur Fahrtrichtung der landwirtschaftlichen Spritzeinrichtung verlaufen. Ferner ist zu berücksichtigen, dass das erste Spritzmuster sich von dem zweiten Spritzmuster unterscheidet. Vorzugsweise handelt es sich bei der Spritzflüssigkeit um Pflanzenschutzmittel. Vorzugsweise sind sämtliche Spritzelemente der landwirtschaftlichen Spritzeinrichtung einzeln ansteuerbar. Die landwirtschaftliche Spritzeinrichtung ist vorzugsweise eine Feldspritze. Die Spritzelemente der landwirtschaftlichen Spritzeinrichtung sind vorzugsweise als Spritzdüsen ausgebildet.

In einer bevorzugten Ausführungsform des erfindungsgemäßen Verfahrens erfolgt die Ausbringung der Spritzflüssigkeit in den Reihenbereichen mit einer ersten Gruppe von Spritzelementen und die Ausbringung von Spritzflüssigkeit in den reihenfreien Bereichen mit einer zweiten Gruppe von Spritzelementen. Vorzugsweise unterscheiden sich die Spritzelemente der ersten Gruppe von den Spritzelementen der zweiten Gruppe. Alternativ können die Spritzelemente der ersten Gruppe und die Spritzelemente der zweiten Gruppe im Wesentlichen identisch sein, wobei die Spritzelemente der ersten Gruppe eine Konfiguration aufweisen, welche von der Konfiguration der Spritzelemente der zweiten Gruppe abweicht. Vorzugsweise sind die Spritzelemente der ersten Gruppe äquidistant zueinander beabstandet. Ferner ist es bevorzugt, dass die Spritzelemente der zweiten Gruppe äquidistant zueinander beabstandet sind.

In einer anderen Ausführungsform des erfindungsgemäßen Verfahrens erfolgt ein selbsttätiges Verändern des Spritzmusters in einem Ausbringbereich unterhalb des Spritzgestänges bei Erfassen eines Pflanzenreihenanfangs. Alternativ oder zusätzlich erfolgt ein selbsttätiges Verändern des Spritzmusters in einem Ausbringbereich unterhalb des Spritzgestänges bei Erfassen eines Pflanzenreihenendes. Im Bereich eines Pflanzenreihenanfangs geht ein reihenfreier Bereich in Fahrtrichtung der Spritzeinrichtung in einen Reihenbereich über. Im Bereich eines Pflanzenreihenendes geht ein Reihenbereich in Fahrtrichtung der Spritzeinrichtung in einen reihenfreien Bereich über. Wenn ein Pflanzenreihenanfang erfasst wird, erfolgt in dem entsprechenden Ausbringbereich unterhalb des Spritzgestänges vorzugsweise eine selbsttätige Einstellung des ersten Spritzmusters oder eine selbsttätige Umstellung von dem zweiten Spritzmuster auf das erste Spritzmuster. Wenn ein Pflanzenreihenende erfasst wird, erfolgt in dem entsprechenden Ausbringbereich unterhalb des Spritzgestänges vorzugsweise eine selbsttätige Einstellung des zweiten Spritzmusters oder eine selbsttätige Umstellung von dem ersten Spritzmuster auf das zweite Spritzmuster. Eine Pflanzenreihe kann beispielsweise in Keilbereichen einer landwirtschaftlichen Nutzfläche, am Vorgewende einer landwirtschaftlichen Nutzfläche oder aufgrund unpräziser Aussaat enden. Ferner ergibt sich in diesen Bereichen bei entgegengesetzter Fahrtrichtung ein entsprechender Pflanzenreihenanfang.

Außerdem ist ein erfindungsgemäßes Verfahren bevorzugt, bei welchem das Verändern des Spritzmusters in einem Ausbringbereich unterhalb des Spritzgestänges bei Erfassen eines Pflanzenreihenanfangs das Deaktivieren zumindest eines dem Ausbringbereich zugeordneten Spritzelements der zweiten Gruppe von Spritzelementen und/oder das Aktivieren zumindest eines dem Ausbringbereich zugeordneten Spritzelements der ersten Gruppe von Spritzelementen umfasst. Einzelnen Ausbringbereichen unterhalb des Spritzgestänges ist jeweils ein Spritzelement oder sind jeweils mehrere Spritzelemente zugeordnet, welche abhängig von der Reihenerfassung aktiviert bzw. deaktiviert werden können. Durch Deaktivieren eines Spritzelements wird dessen Flüssigkeitsausbringung unterbrochen. Durch Aktivieren eines Spritzelements wird dessen Flüssigkeitsausbringung initiiert. Bei Erfassung eines Pflanzenreihenanfangs ist in dem Ausbringbereich von einer flächigen Ausbringung der Spritzflüssigkeit auf eine reihenbezogene Ausbringung der Spritzflüssigkeit umzuschalten. Das Umschalten erfolgt durch Deaktivieren zumindest eines Spritzelements der zweiten Gruppe und Aktivieren zumindest eines Spritzelements der ersten Gruppe von Spritzelementen.

Ferner ist ein erfindungsgemäßes Verfahren vorteilhaft, bei welchem das Verändern des Spritzmusters in einem Ausbringbereich unterhalb des Spritzgestänges bei Erfassen eines Pflanzenreihenendes das Deaktivieren zumindest eines dem Ausbringbereich zugeordneten Spritzelements der ersten Gruppe von Spritzelementen und/oder das Aktivieren zumindest eines dem Ausbringbereich zugeordneten Spritzelements der zweiten Gruppe von Spritzelementen umfasst. Bei Erfassung eines Pflanzenreihenendes ist in dem Ausbringbereich von einer reihenbezogenen Ausbringung der Spritzflüssigkeit auf eine flächige Ausbringung der Spritzflüssigkeit umzuschalten. Das Umschalten erfolgt durch Deaktivieren zumindest eines Spritzelements der ersten Gruppe und Aktivieren zumindest eines Spritzelements der zweiten Gruppe von Spritzelementen.

Ferner ist ein erfindungsgemäßes Verfahren vorteilhaft, bei welchem das Verändern des Spritzmusters in einem Ausbringbereich unterhalb des Spritzgestänges bei Erfassen eines Pflanzenreihenanfangs und/oder eines Pflanzenreihenendes das Verändern des Spritzmusters zumindest eines dem Ausbringbereich zugeordneten Spritzelements umfasst. Insbesondere sind die Spritzelemente als Spritzdüsen ausgebildet, deren Spritzmuster einstellbar ist. Bei Erfassen eines Pflanzenreihenanfangs und/oder eines Pflanzenreihenendes kann eine entsprechende Spritzmustereinstellung selbsttätig durch die landwirtschaftliche Spritzeinrichtung veranlasst werden. Wenn ein Pflanzenreihenanfang erfasst wird, erfolgt an dem zumindest einen dem Ausbringbereich zugeordneten Spritzelement vorzugsweise eine selbsttätige Einstellung des ersten Spritzmusters oder eine selbsttätige Umstellung von dem zweiten Spritzmuster auf das erste Spritzmuster. Wenn ein Pflanzenreihenende erfasst wird, erfolgt an dem zumindest einen dem Ausbringbereich zugeordneten Spritzelement vorzugsweise eine selbsttätige Einstellung des zweiten Spritzmusters oder eine selbsttätige Umstellung von dem ersten Spritzmuster auf das zweite Spritzmuster.

In einer anderen Ausführungsform des erfindungsgemäßen Verfahrens unterscheiden sich das erste Spritzmuster und das zweite Spritzmuster hinsichtlich ihrer Spritzbreiten und/oder Spritzwinkel. Für eine reihenbezogene schmale Streifenausbringung ist entsprechend ein geringer Spritzwinkel in den Reihenbereichen bevorzugt. In den Reihenbereichen kann der Spritzwinkel in einem Bereich von 30-40 Grad liegen. Die Spritzbreite kann in einem Bereich von 10-20 cm liegen. Vorzugsweise erfolgt zwischen den Reihenbereichen aufgrund der eingestellten Spritzmuster keine Ausbringung von Spritzflüssigkeit. Ferner kann das Verfahren auch das Erfassen von Wildbewuchs bzw. Schadbewuchs zwischen erfassten Reihenbereichen umfassen, wobei in diesem Fall eine lokale Ausbringung auf den erfassten Wildbewuchs bzw. Schadbewuchs zwischen den Reihenbereichen erfolgen kann. Eine flächige Ausbringung erfolgt vorzugsweise mit einem offenen Spritzwinkel in den reihenfreien Bereichen. In den reihenfreien Bereichen erfolgt die Ausbringung vorzugsweise mit einem Spritzwinkel von etwa 120 Grad. Die Spritzbreite in den reihenfreien Bereichen kann bei ca. 50 cm liegen.

Das Verfahren wird außerdem dadurch vorteilhaft weitergebildet, dass das erste Spritzmuster und das zweite Spritzmuster zu unterschiedlichen Ausbringmengen und/oder unterschiedlichen Ausbringraten an Spritzflüssigkeit führen. Durch unterschiedliche Ausbringmengen und/oder Ausbringraten können in den Reihenbereichen und reihenfreien Bereichen unterschiedliche Wirkstoffmengen ausgebracht werden. Da der Pflanzenbewuchs in den Reihenbereichen dem erwarteten Pflanzenbewuchs entspricht, kann in den Reihenbereichen eine vergleichsweise präzise Einstellung einer geeigneten Ausbringmenge und/oder Ausbringrate erfolgen. In den reihenfreien Bereichen weicht der Bewuchs von dem erwarteten Bewuchs ab, sodass in diesen Bereichen ein entsprechender Faktor bei der Ermittlung einer geeigneten Ausbringmenge und/oder Ausbringrate zu berücksichtigen ist.

Außerdem ist ein erfindungsgemäßes Verfahren bevorzugt, bei welchem beim Ausbringen von Spritzflüssigkeit mit dem ersten Spritzmuster und beim Ausbringen von Spritzflüssigkeit mit dem zweiten Spritzmuster unterschiedliche Wirkstoffe und/oder unterschiedliche Wirkstoffkonzentrationen ausgebracht werden. Die Wirkstoffe können beispielsweise Herbizide und/oder Fungizide sein. Ferner können die Wirkstoffe auch Flüssigdünger sein. Die Wirkstoffkonzentration kann in den Reihenbereich höher sein als in den reihenfreien Bereichen. Alternativ kann die Wirkstoffkonzentration in den reihenfreien Bereichen höher sein als in den Reihenbereichen.

In einer alternativen Ausführungsform des erfindungsgemäßen Verfahrens erfolgt das Erfassen der Pflanzenreihen auf der landwirtschaftlichen Nutzfläche mittels einer oder mehrerer Sensoreinrichtungen und/oder einer oder mehrerer Kameras der landwirtschaftlichen Spritzeinrichtung. Vorzugsweise ist die eine oder sind die mehreren Sensoreinrichtungen und/oder ist die eine oder sind die mehreren Kameras der landwirtschaftlichen Spritzeinrichtung an dem Spritzgestänge der landwirtschaftlichen Spritzeinrichtung angeordnet und vorzugsweise befestigt. Insbesondere ist einzelnen oder sämtlichen Spritzelementen eine Sensoreinrichtung und/oder eine Kamera zum Erfassen von Pflanzenreihen zugeordnet. Insbesondere erfolgt die Steuerung der Spritzelemente in Abhängigkeit der Daten, welche von der einen oder den mehreren Sensoreinrichtungen und/oder der einen oder den mehreren Kameras erzeugt werden.

Die der Erfindung zugrundeliegende Aufgabe wird ferner durch eine landwirtschaftliche Spritzeinrichtung der eingangs genannten Art gelöst, wobei die Steuerungseinrichtung der erfindungsgemäßen landwirtschaftlichen Spritzeinrichtung gemäß Anspruch 11 dazu eingerichtet ist, in Reihenbereichen der landwirtschaftlichen Nutzfläche mit im Wesentlichen parallel zur Fahrtrichtung der landwirtschaftlichen Spritzeinrichtung verlaufenden Pflanzenreihen zumindest ein Spritzelement dazu zu veranlassen, die Spritzflüssigkeit mit einem ersten Spritzmuster auszubringen und in reihenfreien Bereichen der landwirtschaftlichen Nutzfläche ohne parallel zur Fahrtrichtung der landwirtschaftlichen Spritzeinrichtung (10) verlaufenden Pflanzenreihen zumindest ein Spritzelement dazu zu veranlassen, die Spritzflüssigkeit mit einem zweiten Spritzmuster auszubringen.

Die Erfassungseinrichtung kann dabei eine oder mehrere Kameras und/oder Sensoren zur Pflanzenreihenerfassung umfassen.

In einer besonders bevorzugten Ausführungsform der erfindungsgemäßen landwirtschaftlichen Spritzeinrichtung ist diese dazu eingerichtet, das Verfahren zum Ausbringen von Spritzflüssigkeit nach einer der vorstehend beschriebenen Ausführungsformen auszuführen. Hinsichtlich der Vorteile und Modifikationen der landwirtschaftlichen Spritzeinrichtung wird auf die Vorteile und Modifikationen des erfindungsgemäßen Verfahrens zum Ausbringen von Spritzflüssigkeit verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen landwirtschaftlichen Spritzeinrichtung während des Ausführens des erfindungsgemäßen Verfahrens in einer schematischen Darstellung; und
- Fig. 2: ein Spritzgestänge einer erfindungsgemäßen landwirtschaftlichen Spritzeinrichtung während des Ausführens des erfindungsgemäßen Verfahrens in einer schematischen Darstellung.

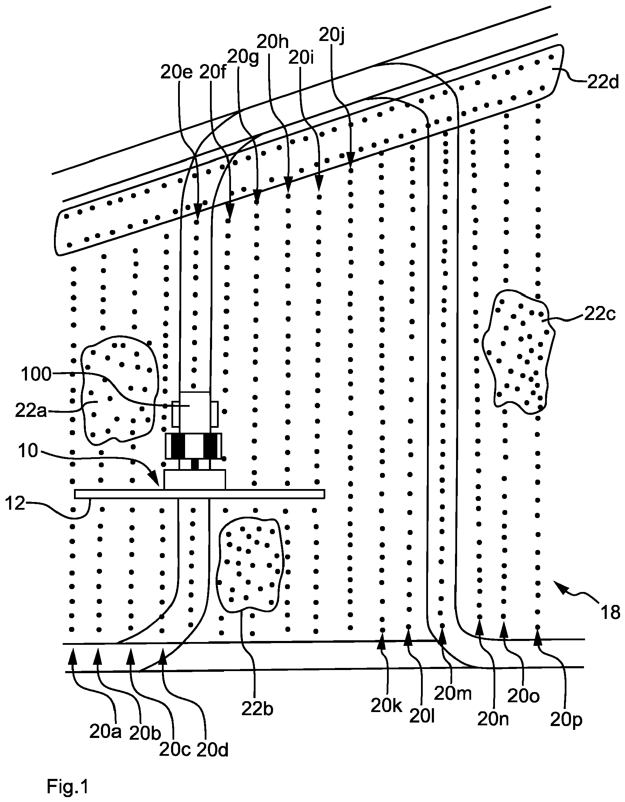

Die Fig. 1 zeigt eine als Feldspritze ausgebildete landwirtschaftliche Spritzeinrichtung 10, welche von einem Traktor 100 getragen wird. Die landwirtschaftliche Spritzeinrichtung 10 bringt eine Spritzflüssigkeit auf eine landwirtschaftliche Nutzfläche 18 und die auf der landwirtschaftlichen Nutzfläche 18 befindlichen Pflanzen aus. Die landwirtschaftliche Spritzeinrichtung 10 bewegt sich entlang von Fahrgassen, welche Bestandteil eines innerhalb der landwirtschaftlichen Nutzfläche 18 angelegten Fahrgassensystems sind.

Während dem Ausbringen von Spritzflüssigkeit auf die landwirtschaftliche Nutzfläche 18 erfasst die landwirtschaftliche Spritzeinrichtung 10 Pflanzenreihen auf der landwirtschaftlichen Nutzfläche 18, welche im Wesentlichen parallel zur Fahrtrichtung der landwirtschaftlichen Spritzeinrichtung 10 verlaufen.

Auf der landwirtschaftlichen Nutzfläche 18 befinden sich Reihenbereiche 20a-20p, in welchen Pflanzenreihen im Wesentlichen parallel zur Fahrtrichtung der landwirtschaftlichen Spritzeinrichtung 10 verlaufen. Darüber hinaus befinden sich auf der landwirtschaftlichen Nutzfläche 18 reihenfreie Bereiche 22a-22d, welche keine parallel zur Fahrtrichtung der landwirtschaftlichen Spritzeinrichtung 10 verlaufenden Pflanzenreihen aufweisen. Die reihenfreien Bereiche 22a-22c sind auf eine unpräzise Saatgutausbringung zurückzuführen. Der reihenfreie Bereich 22d befindet sich im Bereich des Vorgewendes, wobei die Saatgutausbringung in diesem Bereich parallel zur Vorgewende-Fahrspur erfolgte, sodass die feldinterne Reihenstruktur in einem Übergangsbereich zum Vorgewende unterbrochen ist.

Die landwirtschaftliche Spritzeinrichtung 10 weist mehrere an einem Spritzgestänge 12 angeordnete Spritzelemente 14a-14g, 16a-16g auf, welche als Spritzdüsen ausgebildet sind. Die Spritzflüssigkeit wird über die Spritzelemente 14a-14g, 16a-16g auf die landwirtschaftliche Nutzfläche 18 und die sich darauf befindlichen Pflanzen ausgebracht. In den Reihenbereichen 20a-20p der landwirtschaftlichen Nutzfläche 18 wird die Spritzflüssigkeit mit einem ersten Spritzmuster M1 ausgebracht. In den reihenfreien Bereichen 22a-22d der landwirtschaftlichen Nutzfläche 18 wird die Spritzflüssigkeit mit einem zweiten Spritzmuster M2 ausgebracht. Das erste Spritzmuster M1 und das zweite Spritzmuster M2 unterscheiden sich zunächst hinsichtlich ihrer Spritzbreiten B1, B2 und ihrer Spritzwinkel a, β. Die Spritzflüssigkeit wird in den Reihenbereichen 20a-20p mit dem Spritzmuster M1 reihenbezogen ausgebracht, sodass sich eine schmale Streifenausbringung entlang der jeweiligen Pflanzenreihen ergibt. Entsprechend weist das Spritzmuster M1 einen geringen Spritzwinkel α auf. In den reihenfreien Bereichen 22a-22d erfolgt über das Spritzmuster M2 eine flächige, nicht-reihenbezogene Ausbringung der Spritzflüssigkeit. Entsprechend weist das Spritzmuster M2 einen vergleichsweise offenen Spritzwinkel β auf.

Darüber hinaus führen das erste Spritzmuster M1 und das zweite Spritzmuster M2 zu unterschiedlichen Ausbringmengen an Spritzflüssigkeit. Da in den Reihenbereichen 20a-20p eine gezielte Ausbringung auf die in Reihe angeordneten Pflanzen erfolgen kann, ist die Ausbringmenge in den Reihenbereichen 20a-20p geringer als die Ausbringmenge in den reihenfreien Bereichen 22a-22d, auf welche die Spritzflüssigkeit mit dem zweiten Spritzmuster M2 ausgebracht wird.

Zusätzlich können beim Ausbringen von Spritzflüssigkeit mit dem ersten Spritzmuster M1 und beim Ausbringen von Spritzflüssigkeit mit dem zweiten Spritzmuster M2 unterschiedliche Wirkstoffe und/oder unterschiedliche Wirkstoffkonzentrationen ausgebracht werden.

Wenn die landwirtschaftliche Spritzeinrichtung 10 während des Ausbringens der Spritzflüssigkeit einen Pflanzenreihenanfang erfasst, wird das Spritzmuster in dem entsprechenden Ausbringbereich unterhalb des Spritzgestänges 12 durch die landwirtschaftliche Spritzeinrichtung 10 selbsttätig verändert. Im Bereich eines Pflanzenreihenanfangs geht ein reihenfreier Bereich 22a-22d in Fahrtrichtung der Spritzeinrichtung 10 in einen Reihenbereich 20a-20p über. Wenn ein Pflanzenreihenanfang erfasst wird, erfolgt in dem entsprechenden Ausbringbereich unterhalb des Spritzgestänges 12 eine selbsttätige Einstellung des ersten Spritzmusters M1.

Wenn in einem Ausbringbereich unterhalb des Spritzgestänges 12 ein Pflanzenreihenende erfasst wird, wird das Spritzmuster in dem entsprechenden Ausbringbereich unterhalb des Spritzgestänges 12 durch die landwirtschaftliche Spritzeinrichtung 10 selbsttätig verändert. Im Bereich eines Pflanzenreihenendes geht ein Reihenbereich 20a-20p in Fahrtrichtung der Spritzeinrichtung 10 in einen reihenfreien Bereich 22a-22d über. Wenn ein Pflanzenreihenende erfasst wird, erfolgt in dem entsprechenden Ausbringbereich unterhalb des Spritzgestänges 12 eine selbsttätige Einstellung des zweiten Spritzmusters M2.

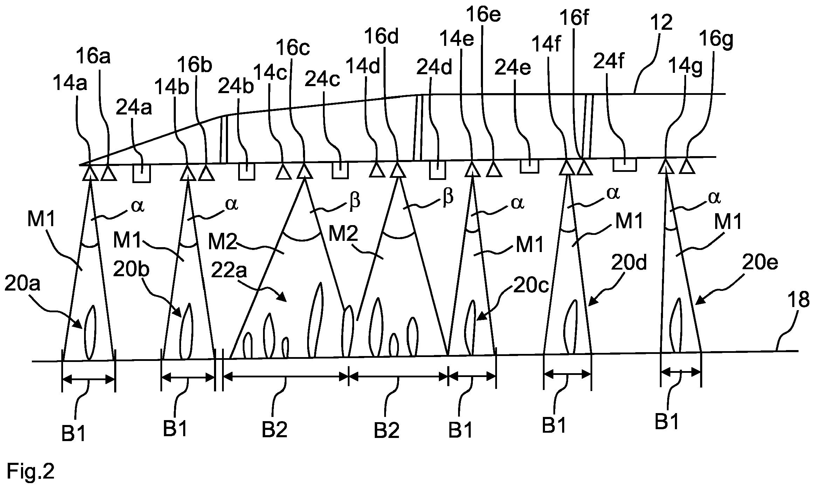

Die Fig. 2 zeigt ein Spritzgestänge 12 mit mehreren als Spritzdüsen ausgebildeten Spritzelementen 14a-14g, 16a-16g. Die Spritzelemente 14a-14g, 16a-16g umfassen eine erste Gruppe von Spritzelementen 14a-14g und eine zweite Gruppe von Spritzelementen 16a-16g. Mit den Spritzelementen 14a-14g lässt sich ein ersten Spritzmuster M1 realisieren. Mit den Spritzelementen 16a-16g lässt sich ein zweites Spritzmuster M2 realisieren. Das erste Spritzmuster M1 und das zweite Spritzmuster M2 unterscheiden sich hinsichtlich ihrer Spritzbreiten B1, B2 und ihrer Spritzwinkel α, β. Vorliegend sind die Spritzelemente 14a-14g, 16a-16g paarweise angeordnet, wobei in anderen Ausführungsformen abweichende Anordnungen möglich sind.

An dem Spritzgestänge 12 sind ferner mehrere Kameras 24a-24f angeordnet, welche Bestandteile einer Erfassungseinrichtung sind. Die Erfassungseinrichtung dient zum Erfassen von Pflanzenreihen auf der landwirtschaftlichen Nutzfläche 18 während des Ausbringens der Spritzflüssigkeit. Mittels einer Steuerungseinrichtung der landwirtschaftlichen Spritzeinrichtung 10 lassen sich die Spritzelemente 14a-14g, 16a-16g einzeln ansteuern.

In den durch die Kameras 24a-24f erfassten Reihenbereichen 20a-20e wird die Spritzflüssigkeit mittels der Spritzelemente 14a, 14b, 14e, 14f, 14g der ersten Gruppe von Spritzelementen 14a-14g ausgebracht. In dem durch die Kameras 24a-24f erfassten reihenfreien Bereich 22a wird die Spritzflüssigkeit mittels der Spritzelemente 16c, 16d aus der zweiten Gruppe der Spritzelemente 16a-16g ausgebracht. Somit kommt es in den Reihenbereichen 20a-20e zu einer reihenbezogenen Ausbringung der Spritzflüssigkeit mit dem ersten Spritzmuster M1. Im reihenfreien Bereich 22a kommt es zu einer flächigen Ausbringung der Spritzflüssigkeit mit dem Spritzmuster M2.

Wenn im weiteren Verlauf ein neuer Pflanzenreihenanfang erfasst wird, erfolgt in dem entsprechenden Ausbringbereich unterhalb des Spritzgestänges 12 eine selbsttätige Umstellung von dem zweiten Spritzmuster M2 auf das erste Spritzmuster M1. Die Umstellung von dem zweiten Spritzmuster M2 auf das erste Spritzmuster M1 wird durch ein Deaktivieren zumindest eines dem Ausbringbereich zugeordneten Spritzelements 16a-16g der zweiten Gruppe von Spritzelementen 16a-16g und einem Aktivieren zumindest eines dem Ausbringbereich zugeordneten Spritzelements 14a-14g der ersten Gruppe von Spritzelementen 14a-14g umgesetzt.

Wenn im weiteren Verlauf ein Pflanzenreihenende erfasst wird, erfolgt in dem entsprechenden Ausbringbereich unterhalb des Spritzgestänges 12 eine selbsttätige Umstellung von dem ersten Spritzmuster M1 auf das zweite Spritzmuster M2. Das Umstellen von dem ersten Spritzmuster M1 auf das zweite Spritzmuster M2 wird durch ein Deaktivieren zumindest eines dem Ausbringbereich zugeordneten Spritzelements 14a-14g der ersten Gruppe von Spritzelementen 14a-14g und einem Aktivieren zumindest eines dem Ausbringbereich zugeordneten Spritzelements 16a-16g der zweiten Gruppe von Spritzelementen 16a-16g umgesetzt.

### Bezugszeichen

- 10: landwirtschaftliche Spritzeinrichtung
- 12: Spritzgestänge
- 14a-14g: Spritzelemente
- 16a-16g: Spritzelemente
- 18: landwirtschaftliche Nutzfläche
- 20a-20p: Reihenbereiche
- 22a-22d: reihenfreie Bereiche
- 24a-24f: Kameras

- 100: Traktor

- M1, M2: Spritzmuster
- B1, B2: Spritzbreite
- α, β: Spritzwinkel

## Patentansprüche

1. Verfahren zum Ausbringen von Spritzflüssigkeit mittels einer landwirtschaftlichen Spritzeinrichtung (10), mit den Schritten:
- Ausbringen von Spritzflüssigkeit auf eine landwirtschaftliche Nutzfläche (18) mittels mehrerer Spritzelemente (14a-14g, 16a-16g), welche an einem Spritzgestänge (12) der landwirtschaftlichen Spritzeinrichtung (10) angeordnet sind, und
- Erfassen von Pflanzenreihen auf der landwirtschaftlichen Nutzfläche (18) während des Ausbringens der Spritzflüssigkeit;
**dadurch gekennzeichnet, dass** die Spritzflüssigkeit in Reihenbereichen (20a-20p) der landwirtschaftlichen Nutzfläche (18) mit im Wesentlichen parallel zur Fahrtrichtung der landwirtschaftlichen Spritzeinrichtung (10) verlaufenden Pflanzenreihen von zumindest einem Spritzelement (14a-14g, 16a-16g) mit einem ersten Spritzmuster (M1) ausgebracht wird und in reihenfreien Bereichen (22a-22d) der landwirtschaftlichen Nutzfläche (18) ohne parallel zur Fahrtrichtung der landwirtschaftlichen Spritzeinrichtung (10) verlaufenden Pflanzenreihen von zumindest einem Spritzelement (14a-14g, 16a-16g) mit einem zweiten Spritzmuster (M2) ausgebracht wird.

2. Verfahren nach Anspruch 1,
**dadurch gekennzeichnet, dass** die Ausbringung der Spritzflüssigkeit in den Reihenbereichen (20a-20p) mit einer ersten Gruppe von Spritzelementen (14a-14g) und die Ausbringung der Spritzflüssigkeit in den reihenfreien Bereichen (22a-22d) mit einer zweiten Gruppe von Spritzelementen (16a-16g) erfolgt.

3. Verfahren nach Anspruch 1 oder 2,
**gekennzeichnet durch** zumindest einen der folgenden Schritte:
- selbsttätiges Verändern des Spritzmusters (M1, M2) in einem Ausbringbereich unterhalb des Spritzgestänges (12) bei Erfassen eines Pflanzenreihenanfangs;
- selbsttätiges Verändern des Spritzmusters (M1, M2) in einem Ausbringbereich unterhalb des Spritzgestänges (12) bei Erfassen eines Pflanzenreihenendes.

4. Verfahren nach Anspruch 3,
**dadurch gekennzeichnet, dass** das Verändern des Spritzmusters (M1, M2) in einem Ausbringbereich unterhalb des Spritzgestänges (12) bei Erfassen eines Pflanzenreihenanfangs zumindest einen der folgenden Schritte umfasst:
- Deaktivieren zumindest eines dem Ausbringbereich zugeordneten Spritzelements (16a-16g) der zweiten Gruppe von Spritzelementen (16a-16g);
- Aktivieren zumindest eines dem Ausbringbereich zugeordneten Spritzelements (14a-14g) der ersten Gruppe von Spritzelementen (14a-14g).

5. Verfahren nach Anspruch 3 oder 4,
**dadurch gekennzeichnet, dass** das Verändern des Spritzmusters (M1, M2) in einem Ausbringbereich unterhalb des Spritzgestänges (12) bei Erfassen eines Pflanzenreihenendes zumindest einen der folgenden Schritte umfasst:
- Deaktivieren zumindest eines dem Ausbringbereich zugeordneten Spritzelements (14a-14g) der ersten Gruppe von Spritzelementen (14a-14g);
- Aktivieren zumindest eines dem Ausbringbereich zugeordneten Spritzelements (16a-16g) der zweiten Gruppe von Spritzelementen (16a-16g).

6. Verfahren nach einem der Ansprüche 3 bis 5,
**dadurch gekennzeichnet, dass** das Verändern des Spritzmusters (M1, M2) in einem Ausbringbereich unterhalb des Spritzgestänges (12) bei Erfassen eines Pflanzenreihenanfangs und/oder eines Pflanzenreihenendes den folgenden Schritt umfasst:
- Verändern des Spritzmusters (M1, M2) zumindest eines dem Ausbringbereich zugeordneten Spritzelements.

7. Verfahren nach einem der vorstehenden Ansprüche,
**dadurch gekennzeichnet, dass** das erste Spritzmuster (M1) und das zweite Spritzmuster (M2) sich hinsichtlich ihrer Spritzbreiten (B1, B2) und/oder Spritzwinkel (α, β) unterscheiden.

8. Verfahren nach einem der vorstehenden Ansprüche,
**dadurch gekennzeichnet, dass** das erste Spritzmuster (M1) und das zweite Spritzmuster (M2) zu unterschiedlichen Ausbringmengen und/oder unterschiedlichen Ausbringraten an Spritzflüssigkeit führen.

9. Verfahren nach einem der vorstehenden Ansprüche,
**dadurch gekennzeichnet, dass** beim Ausbringen von Spritzflüssigkeit mit dem ersten Spritzmuster (M1) und beim Ausringen von Spritzflüssigkeit mit dem zweiten Spritzmuster (M2) unterschiedliche Wirkstoffe und/oder unterschiedliche Wirkstoffkonzentrationen ausgebracht werden.

10. Verfahren nach einem der vorstehenden Ansprüche,
**dadurch gekennzeichnet, dass** das Erfassen der Pflanzenreihen auf der landwirtschaftlichen Nutzfläche (18) mittels einer oder mehreren Sensoreinrichtungen und/oder einer oder mehreren Kameras (24a-24f) der landwirtschaftlichen Spritzeinrichtung (10) erfolgt.

11. Landwirtschlichte Spritzeinrichtung (10), insbesondere Feldspritze, mit
- mehreren Spritzelementen (14a-14g, 16a-16g), welche an einem Spritzgestänge (12) angeordnet und dazu eingerichtet sind, Spritzflüssigkeit auf die landwirtschaftliche Nutzfläche (18) auszubringen;
- einer Erfassungseinrichtung, welche dazu eingerichtet ist, Pflanzenreihen auf der landwirtschaftlichen Nutzfläche (18) während des Ausbringens der Spritzflüssigkeit zu erfassen; und
- einer Steuerungseinrichtung, welche dazu eingerichtet ist, die Ausbringung der Spritzflüssigkeit durch die Spritzelemente (14a-14g, 16a-16g) zu steuern;
**dadurch gekennzeichnet, dass** die Steuerungseinrichtung dazu eingerichtet ist, in Reihenbereichen (20a-20p) der landwirtschaftlichen Nutzfläche (18) mit im Wesentlichen parallel zur Fahrtrichtung der landwirtschaftlichen Spritzeinrichtung (10) verlaufenden Pflanzenreihen zumindest ein Spritzelement (14a-14g, 16a-16g) dazu zu veranlassen, die Spritzflüssigkeit mit einem ersten Spritzmuster (M1) auszubringen und in reihenfreien Bereichen (22a-22d) der landwirtschaftlichen Nutzfläche (18) ohne parallel zur Fahrtrichtung der landwirtschaftlichen Spritzeinrichtung (10) verlaufenden Pflanzenreihen zumindest ein Spritzelement (14a-14g, 16a-16g) dazu zu veranlassen, die Spritzflüssigkeit mit einem zweiten Spritzmuster (M2) auszubringen.

12. Landwirtschaftliche Spritzeinrichtung (10) nach Anspruch 11,
**dadurch gekennzeichnet, dass** die landwirtschaftliche Spritzeinrichtung (10) dazu eingerichtet ist, das Verfahren nach einem der Ansprüche 1 bis 10 auszuführen.

## Claims

1. Method for the application of spray liquid by means of an agricultural spraying device (10), comprising the steps of:
- applying spray liquid onto an agricultural area (18) by means of a plurality of spraying elements (14a-14g, 16a-16g) which are arranged on a sprayer boom (12) of the agricultural spraying device (10), and
- detecting rows of plants on the agricultural area (18) during the application of the spray liquid;
**characterized in that** the spray liquid is applied in row regions (20a-20p) of the agricultural area (18) having rows of plants extending substantially in parallel with the direction of travel of the agricultural spraying device (10) by at least one spraying element (14a-14g, 16a-16g) with a first spray pattern (M1), and the spray liquid is applied in row-free regions (22a-22d) of the agricultural area (18) without rows of plants extending in parallel with the direction of travel of the agricultural spraying device (10) by at least one spraying element (14a-14g, 16a-16g) with a second spray pattern (M2).

2. Method according to claim 1,
**characterized in that** the spray liquid is applied in the row regions (20a-20p) using a first group of spraying elements (14a-14g) and the spray liquid is applied in the row-free regions (22a-222d) using a second group of spraying elements (16a-16g).

3. Method according to either claim 1 or claim 2,
**characterized by** at least one of the following steps:
- automatically changing the spray pattern (M1, M2) in an application region below the spray boom (12) when a start of a plant row is detected;
- automatically changing the spray pattern (M1, M2) in an application region below the spray boom (12) when an end of a plant row is detected.

4. Method according to claim 3,
**characterized in that** changing the spray pattern (M1, M2) in an application region below the spray boom (12) when a start of a plant row is detected comprises at least one of the following steps:
- deactivating at least one spraying element (16a-16g) of the second group of spraying elements (16a-16g) that is assigned to the application region;
- activating at least one spraying element (14a-14g) of the first group of spraying elements (14a-14g) that is assigned to the application region.

5. Method according to either claim 3 or claim 4,
**characterized in that** changing the spray pattern (M1, M2) in an application region below the spray boom (12) when an end of a plant row is detected comprises at least one of the following steps:
- deactivating at least one spraying element (14a-14g) of the first group of spraying elements (14a-14g) that is assigned to the application region;
- activating at least one spraying element (16a-16g) of the second group of spraying elements (16a-16g) that is assigned to the application region.

6. Method according to any of claims 3 to 5,
**characterized in that** changing the spray pattern (M1, M2) in an application region below the spray boom (12) when a start of a plant row and/or an end of a plant row is detected comprises the following step:
- changing the injection pattern (M1, M2) of at least one spraying element assigned to the application region.

7. Method according to any of the preceding claims,
**characterized in that** the first spray pattern (M1) and the second spray pattern (M2) differ in terms of their spray widths (B1, B2) and/or spray angles (α, β).

8. Method according to any of the preceding claims,
**characterized in that** the first spray pattern (M1) and the second spray pattern (M2) lead to different application amounts and/or different application rates of spray liquid.

9. Method according to any of the preceding claims,
**characterized in that** different active substances and/or different active substance concentrations are applied when the spray liquid is applied with the first spray pattern (M1) and when spray liquid is applied with the second spray pattern (M2).

10. Method according to any of the preceding claims,
**characterized in that** the plant rows on the agricultural area (18) are detected by means of one or more sensor devices and/or one or more cameras (24a-24f) of the agricultural spraying device (10).

11. Agricultural spraying device (10), in particular a field sprayer, comprising
- a plurality of spraying elements (14a-14g, 16a-16g) which are arranged on a sprayer boom (12) and are designed to apply spray fluid onto the agricultural area (18);
- a detection device which is designed to detect rows of plants on the agricultural area (18) during the application of the spray liquid; and
- a control device which is designed to control the application of the spray liquid by the spraying elements (14a-14g, 16a-16g);
**characterized in that** the control device is designed to cause at least one spraying element (14a-14g, 16a-16g) to dispense the spray liquid with a first spray pattern (M1) in row regions (20a-20p) of the agricultural area (18) having rows of plants extending substantially in parallel with the direction of travel of the agricultural spraying device (10), and to cause at least one spraying element (14a-14g, 16a-16g) to dispense the spray liquid with a second spray pattern (M2) in row-free regions (22a-222d) of the agricultural area (18) without rows of plants extending in parallel with the direction of travel of the agricultural spraying device (10).

12. Agricultural spraying device (10) according to claim 11,
**characterized in that** the agricultural spraying device (10) is designed to carry out the method according to any of claims 1 to 10.

## Revendications

1. Procédé d'épandage de liquide de pulvérisation au moyen d'un dispositif de pulvérisation agricole (10), comprenant les étapes:
- épandage de liquide de pulvérisation sur une surface utile agricole (18) au moyen de plusieurs éléments de pulvérisation (14a-14g, 16a-16g), qui sont agencés au niveau d'une rampe de pulvérisation (12) du dispositif de pulvérisation agricole (10) et
- détection de rangées de plantes sur la surface utile agricole (18) pendant l'épandage du liquide de pulvérisation ;
**caractérisé en ce que** le liquide de pulvérisation est épandu par au moins un élément de pulvérisation (14a-14g, 16a-16g) selon un premier modèle de pulvérisation (M1) dans les zones de rangées (20a-20p) de la surface utile agricole (18) comprenant des rangées de plantes s'étendant sensiblement parallèlement à la direction de déplacement du dispositif de pulvérisation agricole (10) et est épandu par au moins un élément de pulvérisation (14a-14g, 16a-16g) selon un second modèle de pulvérisation (M2) dans les zones sans rangées (22a-22d) de la surface utile agricole (18) ne comprenant pas de rangées de plantes s'étendant parallèlement à la direction de déplacement du dispositif de pulvérisation agricole (10).

2. Procédé selon la revendication 1,
**caractérisé en ce que** l'épandage du liquide de pulvérisation dans les zones de rangées (20a-20p) a lieu à l'aide d'un premier groupe d'éléments de pulvérisation (14a-14g) et l'épandage du liquide de pulvérisation dans les zones sans rangées (22a-22d) a lieu à l'aide d'un second groupe d'éléments de pulvérisation (16a-16g).

3. Procédé selon la revendication 1 ou 2,
**caractérisé par** au moins l'une des étapes suivantes :
- modification automatique du modèle de pulvérisation (M1, M2) dans une zone d'épandage sous la rampe de pulvérisation (12) lors de la détection d'un début de rangée de plantes ;
- modification automatique du modèle de pulvérisation (M1, M2) dans une zone d'épandage sous la rampe de pulvérisation (12) lors de la détection d'une fin de rangée de plantes.

4. Procédé selon la revendication 3,
**caractérisé en ce que** la modification du modèle de pulvérisation (M1, M2) dans une zone d'épandage sous la rampe de pulvérisation (12) lors de la détection d'un début de rangée de plantes comprend au moins l'une des étapes suivantes :
- désactivation d'au moins un élément de pulvérisation (16a-16g), associé à la zone d'épandage, du second groupe d'éléments de pulvérisation (16a-16g) ;
- activation d'au moins un élément de pulvérisation (14a-14g), associé à la zone d'épandage, du premier groupe d'éléments de pulvérisation (14a-14g).

5. Procédé selon la revendication 3 ou 4,
**caractérisé en ce que** la modification du modèle de pulvérisation (M1, M2) dans une zone d'épandage sous la rampe de pulvérisation (12) lors de la détection d'une extrémité de rangée de plantes comprend au moins l'une des étapes suivantes :
- désactivation d'au moins un élément de pulvérisation (14a-14g), associé à la zone d'épandage, du premier groupe d'éléments de pulvérisation (14a-14g) ;
- activation d'au moins un élément de pulvérisation (16a-16g), associé à la zone d'épandage, du second groupe d'éléments de pulvérisation (16a-16g).

6. Procédé selon l'une quelconque des revendications 3 à 5,
**caractérisé en ce que** la modification du modèle de pulvérisation (M1, M2) dans une zone d'épandage sous la rampe de pulvérisation (12) lors de la détection d'un début de rangée de plantes et/ou d'une extrémité de rangée de plantes comprend l'étape suivante :
- modification du modèle de pulvérisation (M1, M2) d'au moins un élément de pulvérisation associé à la zone d'épandage.

7. Procédé selon l'une quelconque des revendications précédentes,
**caractérisé en ce que** le premier modèle de pulvérisation (M1) et le second modèle de pulvérisation (M2) se distinguent par leurs largeurs de pulvérisation (B1, B2) et/ou leurs angles de pulvérisation (α, β).

8. Procédé selon l'une quelconque des revendications précédentes,
**caractérisé en ce que** le premier modèle de pulvérisation (M1) et le second modèle de pulvérisation (M2) entraînent des quantités d'épandage et/ou des taux d'épandage de liquide de pulvérisation différents.

9. Procédé selon l'une quelconque des revendications précédentes,
**caractérisé en ce que,** lors de l'épandage de liquide de pulvérisation comprenant le premier modèle de pulvérisation (M1) et lors de l'épandage de liquide de pulvérisation comprenant le second modèle de pulvérisation (M2), différentes substances actives et/ou différentes concentrations en substance active sont épandues.

10. Procédé selon l'une quelconque des revendications précédentes,
**caractérisé en ce que** la détection des rangées de plantes sur la surface utile agricole (18) a lieu au moyen d'un ou de plusieurs dispositifs capteurs et/ou d'une ou de plusieurs caméras (24a-24f) du dispositif de pulvérisation agricole (10).

11. Dispositif de pulvérisation agricole (10), en particulier pulvérisateur agricole, comprenant
- plusieurs éléments de pulvérisation (14a-14g, 16a-16g), qui sont agencés au niveau d'une rampe de pulvérisation (12) et conçus pour épandre un liquide de pulvérisation sur la surface utile agricole (18) ;
- un dispositif de détection qui est conçu pour détecter des rangées de plantes sur la surface utile agricole (18) pendant l'épandage du liquide de pulvérisation ; et
- un dispositif de commande, qui est conçu pour commander l'épandage du liquide de pulvérisation par les éléments de pulvérisation (14a-14g, 16a-16g) ;
**caractérisé en ce que** le dispositif de commande est conçu pour permettre, à au moins un élément de pulvérisation (14a-14g, 16a-16g), d'épandre le liquide de pulvérisation selon un premier modèle (M1) dans les zones de rangées (20a-20p) de la surface utile agricole (18) comprenant des rangées de plantes s'étendant sensiblement parallèlement à la direction de déplacement du dispositif de pulvérisation agricole (10) et pour permettre, à au moins un élément de pulvérisation (14a-14g, 16a-16g), d'épandre le liquide de pulvérisation selon un second modèle de pulvérisation (M2) dans les zones sans rangées (22a-22d) de la surface utile agricole (18) ne comprenant pas de rangées de plantes s'étendant parallèlement à la direction de déplacement du dispositif de pulvérisation agricole (10).

12. Dispositif de pulvérisation agricole (10) selon la revendication 11,
**caractérisé en ce que** le dispositif de pulvérisation agricole (10) est conçu pour exécuter le procédé selon l'une quelconque des revendications 1 à 10.
